# EUROPÄISCHE PATENTANMELDUNG

(11) **EP 3 178 682 A1**
(43) Veröffentlichungstag der Anmeldung: **14.06.2017**
(21) Anmeldenummer: 16192550.8
(22) Anmeldetag: 06.10.2016
(51) Int. Cl.: B60G 15/06, F16C 17/10

(54) **FEDERBEINSTÜTZLAGER**

(30) Priorität: 01.12.2015 DE 102015223958
(71) Anmelder: ContiTech Vibration Control GmbH, 30165 Hannover (DE)
(72) Erfinder: Wöhler, Stefan, 31234 Edemissen (DE); Busch, Jirka, 29323 Jeversen (DE)
(74) Vertreter: Finger, Karsten

(57) **Zusammenfassung**

Die Erfindung betrifft ein Federbeinstützlager zur Abstützung eines Fahrwerks eines Kraftfahrzeugs gegen eine Karosserie des Kraftfahrzeugs, mit einem der Karosserie zugeordneten Kopfteil (1, 2) und einem Federteil, wobei das Kopfteil (1, 2) ein der Karosserie zugeordnetes Oberteil (1) und ein dem Federteil zugeordnetes Unterteil (2) aufweist, und Oberteil (1) und Unterteil (2) mit einem Drehlager (10) verdrehbar zueinander angeordnet sind. Das Federbeinstützlager soll so verbessert werden, dass das Drehlager (10) bei möglichst hohen Traglasten ein dauerhaft gleichmäßiges Drehmoment aufweist, dabei platzsparend ist und ohne zusätzlichen Montageaufwand einbaubar ist. Diese Aufgabe wird dadurch gelöst, dass das Drehlager (10) als Gleitlager (10) mit mindestens einer Gleiteinlage (4) und mindestens einer Gleitfläche (7, 8) ausgeführt ist, wobei mindestens das Oberteil (1) oder das Unterteil (2) eine Gleitfläche (7, 8) des Gleitlagers aufweist.

## Beschreibung

Die Erfindung betrifft ein Federbeinstützlager zur Abstützung eines Fahrwerks eines Kraftfahrzeugs gegen eine Karosserie des Kraftfahrzeugs, mit einem der Karosserie zugeordneten Kopfteil und einem Federteil, wobei das Kopfteil ein der Karosserie zugeordnetes Oberteil und ein dem Federteil zugeordnetes Unterteil aufweist, und Oberteil und Unterteil mit einem Drehlager verdrehbar zueinander angeordnet sind.

Federbeine, die aus der Kombination einer Tragfeder und einem Stoßdämpfer bestehen, dienen dazu, insbesondere denkbare Räder, beispielsweise eines Kraftfahrzeugs, gegen eine Karosserie abzustützen. Die Tragfeder ist dabei meist als Schraubenfeder ausgebildet. Die Abstützung der Schraubenfeder soll dabei drehbeweglich gegen die Karosserie gelagert sein, damit die Lenkung nur möglichst geringe Drehmomente aufbringen muss. Die Drehbewegung des Stoßdämpfers ist dabei durch die Drehbarkeit der Kolbenstange im Dämpfergehäuse ausreichend gegeben.

Wenn insbesondere der Einsatz einer Lenkhilfe vorgesehen ist, ist darauf zu achten, dass zur Veimeidung hohen Regelaufwandes das Reibmoment der Drehlagerung zwischen Karosserie und Schraubenfeder über die Lebensdauer des Lagers möglichst konstant bleibt.

In der EP 1559595 B1 ist ein derartiges Lager offenbart, bei dem das Drehlager als Kugellager ausgebildet ist. Diese Art der Lagerung weist jedoch bestimmte Einschränkungen in der Nutzbarkeit auf. So ist durch den Einsatz von Thermoplasten für die Teile des Dämpferblocks die Unterbringung von Lagerschalen für das Kugellager notwendig, was in dieser Lehre Aussparungen in den Kunststoffteilen erforderlich macht.

Da thermoplastische Kunststoffe unter Last kriechen, besteht hier die Gefahr, dass die relativ dünnen Lagerschalen des Kugellagers diesen Verformungen folgen, was eine Erhöhung des zur Verdrehung notwendigen Drehmomentes im Kugellager zur Folge hat. Außerdem sind Kugellager relativ empfindlich gegen äußere Einflüsse, wie eindringendes Wasser, Schmutz etc., was relativ aufwendige Dichtsysteme erfordert.

Zusätzlich ist die Tragfähigkeit der genannten Kugellager begrenzt.

In der DE 10 2010 036242 A1 ist ein Federbeingleitlager offenbart, welches zum Einsatz in Federbeinstützlagern vorgesehen ist. Ein derartiges Gleitlager ist jedoch ein separates Bauteil, was die ohnehin meist knappen Platzverhältnisse beim Federbeinstützlager zusätzlich verschärft. Außerdem entsteht dadurch ein höherer Montageaufwand.

Der Erfindung liegt die Aufgabe zugrunde, ein Federbeinstützlager der eingangs geschilderten Art so zu verbessern, dass das Drehlager bei möglichst hohen Traglasten ein dauerhaft gleichmäßiges Drehmoment aufweist, dabei platzsparend ist und ohne zusätzlichen Montageaufwand einbaubar ist.

Diese Aufgabe wird dadurch gelöst, dass das Drehlager als Gleitlager mit mindestens einer Gleiteinlage und mindestens einer Gleitfläche ausgeführt ist, wobei mindestens das Oberteil oder das Unterteil eine Gleitfläche des Gleitlagers aufweist.

Auf diese Weise ist das Drehlager in seiner Bauhöhe reduziert, da entweder der obere oder der untere Lagerteil des Gleitlagers kein separates Bauteil mehr ist, sondern das Oberteil oder das Unterteil des Kopfteils selbst eine Gleitfläche des Gleitlagers bildet.

In einer Weiterbildung der Erfindung ist mindestens ein Bauteil des Kopfteiles des Federbeinstützlagers mit einem Gleitmittel mindestens teilweise fest beschichtet, wobei das Gleitmittel die Gleiteinlage des Gleitlagers bildet.

Auf diese Weise ist die Montage des Kopfteils des Federbeinstützlagers besonders einfach, da eine separate Gleiteinlage nicht mehr erforderlich ist.

In einer Weiterbildung der Erfindung weisen Gleitflächen und Gleiteinlage des Drehlagers zwei Abschnitte auf, die gegeneinander abgewinkelt sind.

In einer Weiterbildung der Erfindung sind die Abschnitte des Drehlagers um 45° gegeneinander abgewickelt.

In einer Weiterbildung der Erfindung sind die Abschnitte des Drehlagers um 90° gegeneinander abgewinkelt.

Die Abwinklung des Gleitlagers sorgt neben der axialen auch für eine gute radiale Kraftübertragung des Drehlagers. Eine zusätzliche radiale Führung von Ober- und Unterteil sind so nicht notwendig.

Die erfindungsgemäße Ausbildung eines Federbeinstützlagers ermöglicht den Einsatz einer Vielzahl von Werkstoffen bei Ober- und Unterteil. Durch den Einsatz eines Gleitlagers sind hohe Traglasten erreichbar. Da Ober- und/oder Unterteil integrale Bestandteile des Gleitlagers sind, ist eine geringe Einbauhöhe erreichbar.

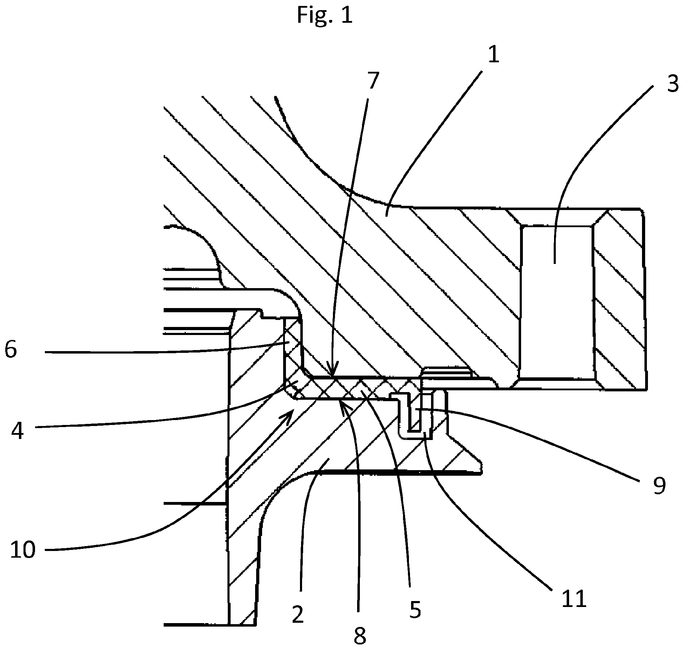

Anhand der Zeichnung wird nachstehend ein Beispiel der Erfindung näher erläutert. Die einzige Figur zeigt einen Ausschnitt aus einem Kopfteil eines erfindungsgemäßen Federbeinstützlagers. Das Kopfteil weist ein Oberteil 1 und ein Unterteil 2 auf. Das Oberteil 1 ist durch Bohrungen 3, von denen hier nur eine gezeigt ist, mit einer nicht dargestellten Kraftfahrzeug-Karosserie verbindbar.

Zwischen Oberteil 2 und Unterteil 3 ist ein Gleitelement 4 angeordnet. Das Gleitelement 4 weist zwei Abschnitte 5 und 6 auf, wobei die Abschnitte 5 und 6 einen Winkel von nahezu 90° zueinander aufweisen.

Das Oberteil 1 weist eine Gleitfläche 7 auf, die korrespondierend zur Form des Gleitelements 4 ausgebildet ist und mit dem Gleitelement 4 in Kontakt steht. Das Unterteil 2 weist eine Gleitfläche 8 auf, die korrespondierend zur Form des Gleitelements 4 ausgebildet ist und mit dem Gleitelement 4 in Kontakt steht.

Die Gleitflächen 7 und 8 bilden zusammen mit dem Gleitelement 4 ein Gleitlager 10, sodass das Oberteil 1 gegen das Unterteil 2 drehbar gelagert ist. Durch die Formgebung von Gleitflächen 7 und 8 sowie des Gleitelements 4 ist das Oberteil 1 gegen das Unterteil 2 sowohl axial als auch radial geführt.

Am nach außenweisenden Ende 9 des Abschnittes 5 des Gleitelements 4 ist das Gleitelement 4 leicht verjüngt und um nahezu 90° in Richtung auf das Unterteil 2 abgewinkelt. Das Unterteil 2 weist in diesem Bereich eine Nut 11 auf, in die das abgewinkelte in den 9 des Gleitelements 4 hineinragt. Durch diese Anordnung ist quasi eine Labyrinthdichtung gebildet, die das Gleitlager gegen äußere Einflüsse wie Spritzwasser etc. schützt.

Dadurch, dass Oberteil 1 und Unterteil 2 die Gleitflächen 7 und 8 des Gleitlagers 10 integral umfassen, ist die Bauhöhe des Gleitlagers 10 minimiert. Die relativ großen Auflageflächen 7 und 8 sorgen für eine niedrige Flächenpressung, sodass das Risiko einer eventuellen Verformung des Urteils 1 oder des Unterteils 2 ebenfalls minimiert ist. Das Gleitelement 4 ist alternativ auch als Beschichtung direkt am Urteil 1 oder am Unterteil 2 anbringbar. Dadurch würde die Montage des Kopfteils stark vereinfacht.

### Bezugszeichenliste

### (Teil der Beschreibung)

- 1: Oberteil
- 2: Unterteil
- 3: Bohrungen im Oberteil 1
- 4: Gleitelement, Gleitmittel
- 5, 6: Abschnitte des Gleitelements 4
- 7, 8: Gleitflächen
- 9: Ende des Abschnittes 5
- 10: Drehlager, Gleitlager
- 11: Nut im Unterteil 2

## Patentansprüche

1. Federbeinstützlager zur Abstützung eines Fahrwerks eines Kraftfahrzeugs gegen eine Karosserie des Kraftfahrzeugs, mit einem der Karosserie zugeordneten Kopfteil (1, 2) und einem Federteil, wobei das Kopfteil (1, 2) ein der Karosserie zugeordnetes Oberteil (1) und ein dem Federteil zugeordnetes Unterteil (2) aufweist, und Oberteil (1) und Unterteil (2) mit einem Drehlager (10) verdrehbar zueinander angeordnet sind, **dadurch gekennzeichnet, dass** das Drehlager (10) als Gleitlager (10) mit mindestens einer Gleiteinlage (4) und mindestens einer Gleitfläche (7, 8) ausgeführt ist, wobei mindestens das Oberteil (1) oder das Unterteil (2) eine Gleitfläche (7, 8) des Gleitlagers aufweist.

2. Federbeinstützlager nach Anspruch 1, **dadurch gekennzeichnet, dass** mindestens ein Bauteil (1, 2) des Kopfteils (1,2) des Federbeinstützlagers mit einem Gleitmittel (4) mindestens teilweise fest beschichtet ist, wobei das Gleitmittel (4) die Gleiteinlage (4) des Gleitlagers (10) bildet.

3. Federbeinstützlager nach Anspruch 1 oder 2, **dadurch gekennzeichnet, dass** Gleitflächen (7, 8) und Gleiteinlage (4) des Drehlagers (10) zwei Abschnitte (5, 6) aufweisen, die gegeneinander abgewinkelt sind.

4. Federbeinstützlager nach Anspruch 3, **dadurch gekennzeichnet, dass** die Abschnitte des Drehlagers um nahezu 45° gegeneinander abgewinkelt sind.

5. Federbeinstützlager nach Anspruch 3, **dadurch gekennzeichnet, dass** die Abschnitte des Drehlagers um nahezu 90° gegeneinander abgewinkelt sind.
